Europäisches Patentamt

European Patent Office

Office européen des brevets

(19)

(11) **EP 1 416 437 A1**

(12) **EUROPEAN PATENT APPLICATION**

(43) Date of publication:
06.05.2004 Bulletin 2004/19

(51) Int Cl.$^7$: **G06N 1/00**

(21) Application number: 02425672.9

(22) Date of filing: 04.11.2002

| | |
|---|---|
| (84) Designated Contracting States:<br>**AT BE BG CH CY CZ DE DK EE ES FI FR GB GR IE IT LI LU MC NL PT SE SK TR**<br>Designated Extension States:<br>**AL LT LV MK RO SI** | • **Branciforte, Marco**<br>**95131 Catania (IT)**<br>• **Ticli, Lucio**<br>**95037 San Giovanni La Punta (IT)** |
| (71) Applicant: **STMicroelectronics S.r.l.**<br>**20041 Agrate Brianza (Milano) (IT)** | (74) Representative: **Pellegri, Alberto et al**<br>**c/o Società Italiana Brevetti S.p.A.**<br>**Piazza Repubblica, 5**<br>**21100 Varese (IT)** |
| (72) Inventors:<br>• **Porto, Domenico**<br>**95123 Catania (IT)** | |

(54) **Hardware Quantum Gate**

(57)    A hardware quantum gate for performing quantum algorithms in a very fast manner exploits the fact that a large number of multiplications required by the entanglement operation of quantum algorithms gives a null result, because only one component per row of the entanglement matrix $U_F$ is non null.

The entanglement operation generates an entanglement vector by permuting or not the places of couples of opposite components of a linear superposition vector, depending on the value assumed by the function $f(.)$. More specifically, if function $f(.)$ is null in correspondence of the vector identified by the first (leftmost) $n$ qubits in common of the two $n+1$ qubit vectors to which a couple of opposite components that of the superposition vector is referred to, then the corresponding couple of components of the entanglement vector is equal to that of the superposition vector, otherwise is the opposite.

Therefore, it is not necessary to calculate the entanglement matrix $U_F$ to generate an entanglement vector from a superposition vector, but it is sufficient copying or inverting components of a superposition vector to generate corresponding components of an entanglement vector, depending on the values of the function $f(.)$ processed by the quantum algorithm. This can be easily done using driven switches input with a pair of components of opposite value of a superposition vector.

**FIG. 8**

**Description**

FIELD OF THE INVENTION

The present invention relates to quantum algorithms and more precisely to a hardware quantum gate that performs, in particular, the entanglement operation of quantum algorithms in a very fast manner.

BACKGROUND OF THE INVENTION

Quantum algorithms are global random searching algorithms based on the quantum mechanics principles, laws, and quantum effects. They are used for controlling a process or for processing data in a database, and more specifically to control a process and/or including search-of-minima intelligent operations.
In the quantum search, each design variable is represented by a finite linear superposition of classical initial states, with a sequence of elementary unitary steps manipulate the initial quantum state $|i\rangle$ (for the input) such that a measurement of the final state of the system yields the correct output. Usually, three principle operators, i.e. *linear superposition (coherent states), entanglement,* and *interference,* are used in the quantum search algorithm.
For a better comprehension of the field of application of the invention, a brief description of quantum search algorithms is provided.

OVERVIEW ON QUANTUM ALGORITHMS

The problems solved by the quantum algorithms may be stated as follows:

| Input | A function $f{:}\{0,1\}^n{\to}\{0,1\}^m$ |
|---|---|
| **Problem** | Find a certain property of $f$ |

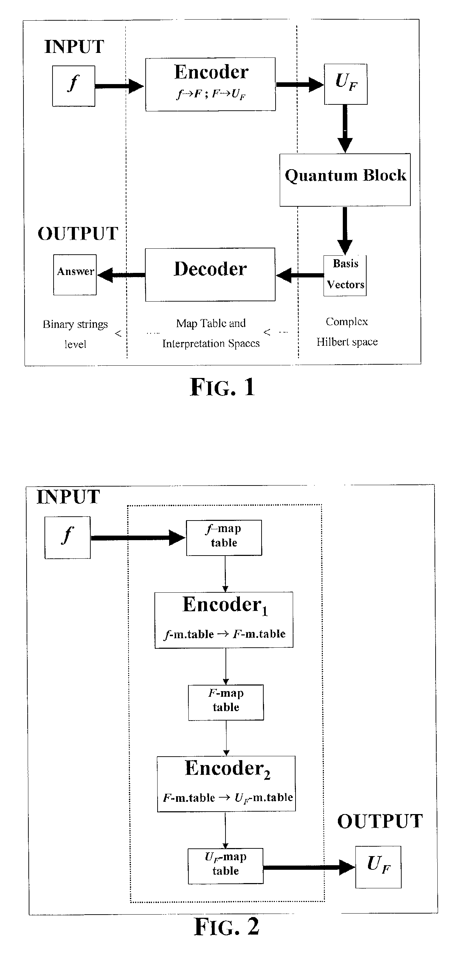

The structure of a quantum algorithm is outlined, by a high level representation, in the schematic diagram of Figure 1.
The input of a quantum algorithm is always a function $f$ from binary strings into binary strings. This function is represented as a map table, defining for every string its image. Function $f$ is firstly encoded into a unitary matrix operator $U_F$ depending on $f$ properties. In some sense, this operator calculates $f$ when its input and output strings are encoded into canonical basis vectors of a Complex Hilbert

---

BOX 1: UNITARY MATRIX $U_F$

A squared matrix $U_F$ on the complex field is *unitary* if its inverse matrix coincides with its conjugate transpose:

$$U_F{}^{-1} = U_F{}^{\dagger}$$

A unitary matrix is always reversible and preserves the norm of vectors.

---

Space: $U_F$ maps the vector code of every string into the vector code of its image by $f$.

When the matrix operator $U_F$ has been generated, it is embedded into a quantum gate G, a unitary matrix whose structure depends on the form of matrix $U_F$ and on the problem we want to solve. The quantum gate is the core of a quantum algorithm. In every quantum algorithm, the quantum gate acts on an initial canonical basis vector (we can always choose the same vector) in order to generate a complex linear combination (let us call it superposition) of basis vectors as output. This superposition contains all the information to answer the initial problem.

After this superposition has been created, <u>measurement</u> takes place in order to extract this information. In quantum mechanics, measurement is a non-deterministic operation that produces as output only one of the basis vectors in the entering superposition. The probability of every basis vector of being the output of measurement depends on its complex coefficient <u>(probability amplitude)</u> in entering complex linear combination.

The segmental action of the quantum gate and of measurement constitutes the <u>quantum block.</u> The quantum block is repeated $k$ times in order to produce a collection of k basis vectors. Being measurement a non-deterministic operation, these basic vectors won't be necessarily identical and each one of them will encode a piece of the information needed to solve the problem.

The last part of the algorithm consists into the interpretation of the collected basis vectors in order to get the right answer for the initial problem with a certain probability.

**Encoder**

The behavior of the encoder block is described in the detailed schematic diagram of Figure 2.

Function $f$ is encoded into matrix $U_F$ in three steps.

*Step 1*

The map table of function $f:\{0,1\}^n \rightarrow \{0,1\}^m$ is transformed into the map table of the <u>injective</u> function $F:\{0,1\}^{n+m} \rightarrow \{0,1\}^{n+m}$ such that:

$$F(x_0, ..., x_{n-1}, y_0, ..., y_{m-1}) = (x_0, ..., x_{n-1}, f(x_0, ..., x_{n-1}) \oplus (y_0, ..., y_{m-1})) \tag{1}$$

---

### BOX 2: XOR OPERATOR ⊕

The XOR operator between two binary strings $p$ and $q$ of length $m$ is a string $s$ of length $m$ such that the $i$-th digit of $s$ is calculated as the exclusive OR between the $i$-th digits of $p$ and $q$:

$$p = (p_0, .., p_{n-1})$$

$$q = (q_0, .., q_{n-1})$$

$$s = p \oplus q = ((p_0 + q_0) \bmod 2, .., (p_{n-1} + q_{n-1}) \bmod 2))$$

---

The need to deal with an injective function comes from the requirement that $U_F$ is unitary. A unitary operator is <u>reversible,</u> so it cannot map two different inputs in the same output. Given that $U_F$ is the matrix representation of $F$, $F$ is supposed to be injective. If we directly employed the matrix representation of function $f$, we could obtain a non-unitary matrix, since $f$ could be non-injective. So, injectivity is fulfilled by increasing the number of bits and considering function $F$ instead of function $f$. Anyway, function $f$ can always be calculated from $F$ by putting $(y_0, ..., y_{m-1}) = (0, ..., 0)$ in the input string and reading the last $m$ values of the output string.

*Step 2*

Function $F$ map table is transformed into $U_F$ map table, following the following constraint:

$$\forall s \in \{0,1\}^{n+m}: U_F[\tau(s)] = \tau[F(s)] \tag{2}$$

The code map $\tau: \{0,1\}^{n+m} \rightarrow \mathbf{C}^{2n+m}$ ($\mathbf{C}^{2n+m}$ is the target Complex Hilbert Space) is such that:

$$\tau(0) = \begin{pmatrix} 1 \\ 0 \end{pmatrix} = |0\rangle \quad \tau(1) = \begin{pmatrix} 0 \\ 1 \end{pmatrix} = |1\rangle \tag{3}$$

$$\tau(x_0,..,x_{n+m-1}) = \tau(x_0) \otimes .. \otimes \tau(x_{n+m-1}) = |x_0..x_{n+m-1}\rangle$$

---

## BOX 3: VECTOR TENSOR PRODUCT $\otimes$

The tensor product between two vectors of dimensions $h$ and $k$ is a tensor product of dimension $h \cdot k$, such that:

$$|x\rangle \otimes |y\rangle = \begin{pmatrix} x_1 \\ ... \\ x_h \end{pmatrix} \otimes \begin{pmatrix} y_1 \\ ... \\ y_k \end{pmatrix} = \begin{pmatrix} x_1 y_1 \\ ... \\ x_1 y_k \\ ... \\ x_h y_1 \\ ... \\ x_h y_k \end{pmatrix} \Longrightarrow$$

### Physical interpretation:

*If a component of a complex vector is interpreted as the probability amplitude of a system of being in a given state (indexed by the component number), the tensor product between two vectors describes the joint probability amplitude of two systems of being in a joint state.*

---

**Examples: Vector Tensor Products**

$$(0,0) \xrightarrow{\tau} \begin{pmatrix} 1 \\ 0 \end{pmatrix} \otimes \begin{pmatrix} 1 \\ 0 \end{pmatrix} = \begin{pmatrix} 1 \\ 0 \\ 0 \\ 0 \end{pmatrix} = |00\rangle \qquad (0,1) \xrightarrow{\tau} \begin{pmatrix} 1 \\ 0 \end{pmatrix} \otimes \begin{pmatrix} 0 \\ 1 \end{pmatrix} = \begin{pmatrix} 0 \\ 1 \\ 0 \\ 0 \end{pmatrix} = |01\rangle$$

$$(1,0) \xrightarrow{\tau} \begin{pmatrix} 0 \\ 1 \end{pmatrix} \otimes \begin{pmatrix} 1 \\ 0 \end{pmatrix} = \begin{pmatrix} 0 \\ 0 \\ 1 \\ 0 \end{pmatrix} = |10\rangle \qquad (1,1) \xrightarrow{\tau} \begin{pmatrix} 0 \\ 1 \end{pmatrix} \otimes \begin{pmatrix} 0 \\ 1 \end{pmatrix} = \begin{pmatrix} 0 \\ 0 \\ 0 \\ 1 \end{pmatrix} = |11\rangle$$

Code $\tau$ maps bit values into complex vectors of dimension 2 belonging to the canonical basis of $C^2$. Besides, using tensor product, $\tau$ maps the general state of a binary string of dimension n into a vector of dimension $2^n$, reducing this state to the joint state of the $n$ bits composing the register. Every bit state is transformed into the corresponding 2-dimensional basis vector and then the string state is mapped into the corresponding $2^n$-dimensional basis vector by composing all bit-vectors through tensor product. In this sense tensor product is the vector counterpart of state conjunction.

Basis vectors are denoted using the *ket* notation $|i\rangle$. This notation is taken from Dirac description of quantum mechanics.

*Step 3*

$U_F$ map table is transformed into $U_F$ using the following transformation rule:

$$[U_F]_{ij} = 1 \Leftrightarrow U_F|j\rangle = |i\rangle \tag{4}$$

which can be easily understood considering vectors $|i\rangle$ and $|j\rangle$ as column vectors. Belonging these vectors to the canonical basis, $U_F$ defines a permutation map of the identity matrix rows. In general, row $|j\rangle$ is mapped into row $|i\rangle$.

This rule will be illustrated in detail in an example of quantum algorithm: Grover's algorithm.

**Quantum block**

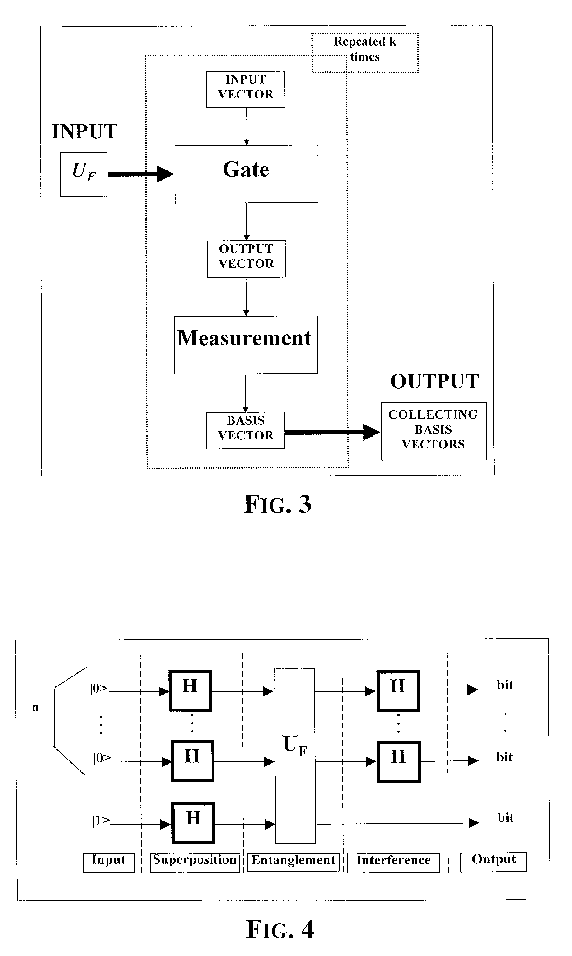

The core of the quantum block is the quantum gate, which depends on the properties of matrix $U_F$. The scheme in Figure 3 gives a more detailed description of the quantum block.

The matrix operator $U_F$ in Figure 3 is the output of the encoder block represented in Figure 2. Here, it becomes the input for the quantum block.

This matrix operator is firstly embedded into a more complex gate: the quantum gate G. Unitary matrix G is applied k times to an initial canonical basis vector $|i\rangle$ of dimension $2^{n+m}$. Every time, the resulting complex superposition $G|0..01..1\rangle$ of basis vectors is measured, producing one basis vector $|x_i\rangle$ as result. All the measured basis vectors $\{|x_i\rangle,..,|x_k\rangle\}$ are collected together. This collection is the output of the quantum block.

The "intelligence" of such algorithms is in the ability to build a quantum gate that is able to extract the information necessary to find the required property of $f$ and to store it into the output vector collection.

The structure of the quantum gate for every quantum algorithm will be discussed in detail, observing that a general description is possible.

In order to represent quantum gates we are going to employ some special diagrams called quantum circuits.

An example of quantum circuit, relative to the so called Deutsch-Jozsa's quantum algorithm, is reported in Figure 4. Every rectangle is associated to a matrix $2^n \times 2^n$, where n is the number of lines entering and leaving the rectangle. For example, the rectangle marked $U_F$ is associated to matrix $U_F$. Typically, matrix H represents a Hadamard rotation

$$H = \frac{1}{\sqrt{2}}\begin{bmatrix} 1 & 1 \\ 1 & -1 \end{bmatrix} \tag{5}$$

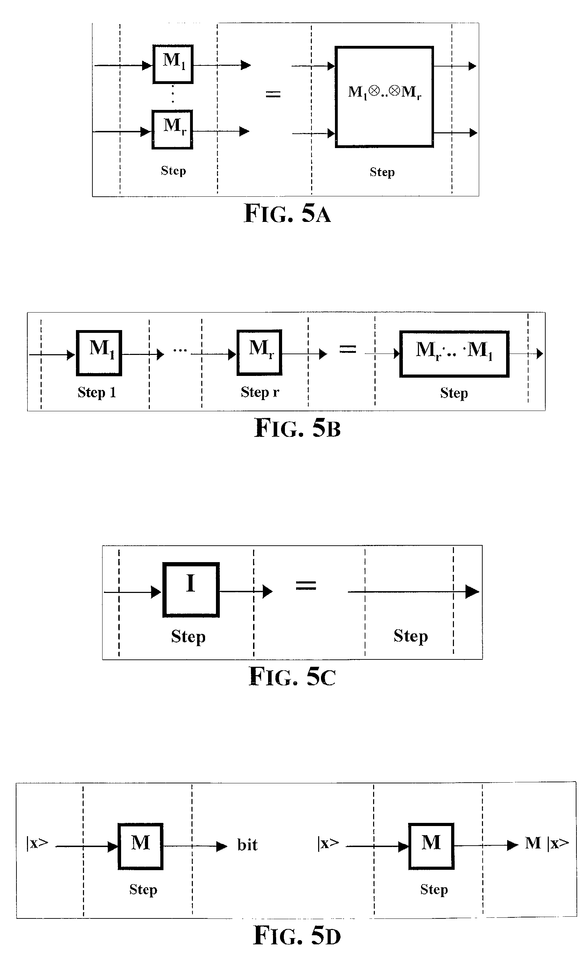

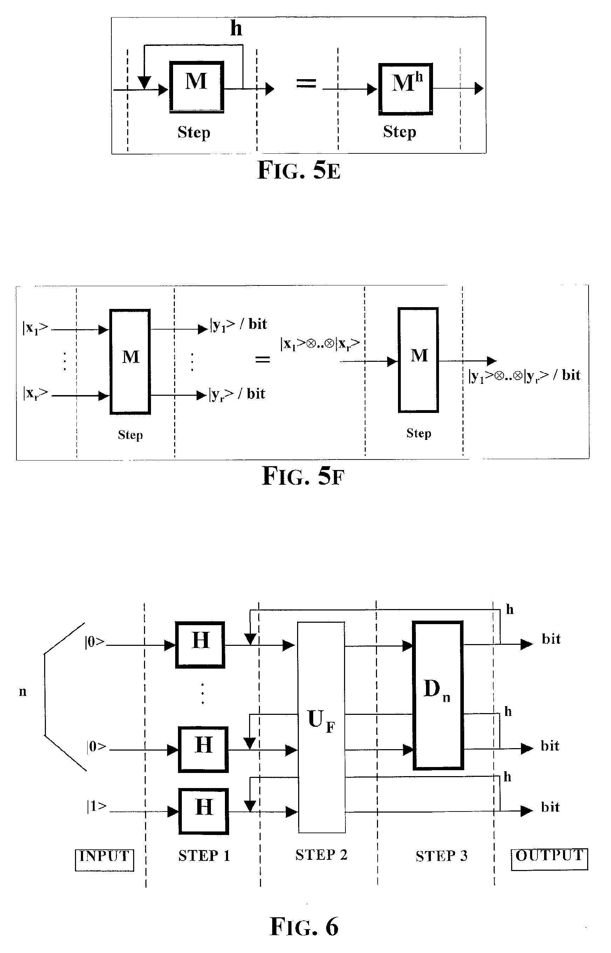

Quantum circuits let us give a high-level description of the gate and, using some transformation rules, which are listed in Figure 5, it is possible to compile them into the corresponding gate-matrix.

---

### BOX 4: MATRIX TENSOR PRODUCT $\otimes$

The tensor product between two matrices $X_{n \times m}$ and $Y_{h \times k}$ is a (block) matrix $(n \cdot h) \times (m \cdot k)$ such that:

$$X \otimes Y = \begin{bmatrix} x_{11}Y & .. & x_{1m}Y \\ .. & .. & .. \\ x_{n1}Y & .. & x_{nm}Y \end{bmatrix} \quad with \quad X = \begin{bmatrix} x_{11} & .. & x_{1m} \\ .. & .. & .. \\ x_{n1} & .. & x_{nm} \end{bmatrix}$$

---

**Example: Matrix Tensor Product**

$$\begin{bmatrix} 1 & 2 \\ 3 & 4 \end{bmatrix} \otimes \begin{bmatrix} 5 & 6 \\ 7 & 8 \end{bmatrix} = \begin{bmatrix} 1 \cdot \begin{bmatrix} 5 & 6 \\ 7 & 8 \end{bmatrix} & 2 \cdot \begin{bmatrix} 5 & 6 \\ 7 & 8 \end{bmatrix} \\ 3 \cdot \begin{bmatrix} 5 & 6 \\ 7 & 8 \end{bmatrix} & 4 \cdot \begin{bmatrix} 5 & 6 \\ 7 & 8 \end{bmatrix} \end{bmatrix} = \begin{bmatrix} 5 & 6 & 10 & 12 \\ 7 & 8 & 14 & 16 \\ 15 & 18 & 20 & 24 \\ 21 & 24 & 28 & 32 \end{bmatrix}$$

It will be clearer how to use these rules when we afford the first example of quantum algorithm.

### Decoder

The decoder block has the function to interpret the basis vectors collected after the iterated execution of the quantum block. Decoding these vectors means to retranslate them into binary strings and interpreting them directly if they already contain the answer to the starting problem or use them, for instance as coefficients vectors for some equation system, in order to get the searched solution. This part will not being investigated in detail because it is a non-interesting easy classical part.

Because of the particular importance of the Grover's quantum algorithm in the realization of controllers and of data search algorithms in databases, a brief description of the Grover's algorithm is given.

## GROVER'S PROBLEM

Grover's problem is so stated:

| Input | A function $f:\{0,1\}^n \to \{0,1\}$ such that $\exists x \in \{0,1\}^n: (f(x)=1 \wedge \forall y \in \{0,1\}^n: x \neq y \Rightarrow f(y)=0)$ |
|---|---|
| **Problem** | Find $x$ |

In Deutsch-Jozsa's algorithm there are two classes of input functions and it must be determined what class the input function belongs to. In this case the problem is in some sense identical in its form, even if it is harder because now we are dealing with $2^n$ classes of input functions (each function of the kind described constitutes a class).

The diagram of the Grover's algorithm is depicted in Figure 6, and the gate equation is

$$\Phi = \left[ (D_n \otimes I) \cdot U_F \right]^h \cdot \left( {}^{n+1}H \right) \qquad (6)$$

Operator $D_n$ is called <u>diffusion matrix</u> of order $n$ and it is responsible of interference in this algorithm. This matrix is defined in this way:

| $D_n$ | $\lvert 0..0\rangle$ | $\lvert 0..1\rangle$ ... | ... | $\lvert i\rangle$ | ... | $\lvert 1..0\rangle$ | $\lvert 1..1\rangle$ |
|---|---|---|---|---|---|---|---|
| $\lvert 0..0\rangle$ | $-1+1/2^{n-1}$ | $1/2^{n-1}$ | ... | $1/2^{n-1}$ | ... | $1/2^{n-1}$ | $1/2^{n-1}$ |
| $\lvert 0..1\rangle$ | $1/2^{n-1}$ | $-1+1/2^{n-1}$ | ... | $1/2^{n-1}$ | ... | $1/2^{n-1}$ | $1/2^{n-1}$ |
| ... | ... | ... | **...** | ... | ... | ... | ... |
| $\lvert i\rangle$ | $1/2^n-1$ | $1/2^n-1$ | ... | $-1+1/2^{n-1}$ | ... | $1/2^n-1$ | $1/2^n-1$ |
| ... | ... | ... | ... | ... | **...** | ... | ... |
| $\lvert 1..0\rangle$ | $1/2^n-1$ | $1/2^n-1$ | ... | $1/2^n-1$ | ... | $-1+1/2^{n-1}$ | $1/2^n-1$ |
| $\lvert 1..1\rangle$ | $1/2^{n-1}$ | $1/2^{n-1}$ | ... | $1/2^{n-1}$ | ... | $1/2^{n-1}$ | $-1+1/2^{n-1}$ |

Grover's algorithm may be implemented in routines for searching a desired item in a set, by representing in vector form each item of the set constituting an input set of vectors, and applying a Grover's algorithm to this set of vectors: the output vector represents the desired item.

The implementation of a Grover's algorithm clearly implies the calculation of several vector products. In fact all qubits must be multiplied by matrix H, then by the entanglement matrix $U_F$ and all qubits but the latter must be multiplied by matrix $D_n$.

These multiplications could be carried out via software, but it is quite evident that the number of qubits of a quantum algorithm is very critical in terms of computational speed. In fact, referring to the scheme in Figure 6, it must be noted that the addition of only one qubit doubles the dimensions of matrices, thus the number of elements (and of products) increases exponentially.

A method of performing the superposition operation of a Grover's or of a Deutsch-Jozsa's quantum algorithm over an input set of vectors is disclosed in EP01830383.4, in the name of the same applicant. This method exploits the fact that any rotated vector, obtained performing the Hadamard rotation (on an input vector) contemplated by the superposition operation of these quantum algorithms, can be easily encoded in a binary vector. Therefore, the successive tensor product of the rotated vectors, for generating linear superposition vectors, can be carried out by means of logic gates. This fact allows a noticeable time saving because logic gates are very fast.

However, this is not sufficient to speed up remarkably the running of these

quantum algorithms because the entanglement matrix $U_F$ is a $2^{n+1} \times 2^{n+1}$ square matrix, which implies a considerable computational weight both in Grover's algorithm as well as in Deutsch-Jozsa's algorithm.

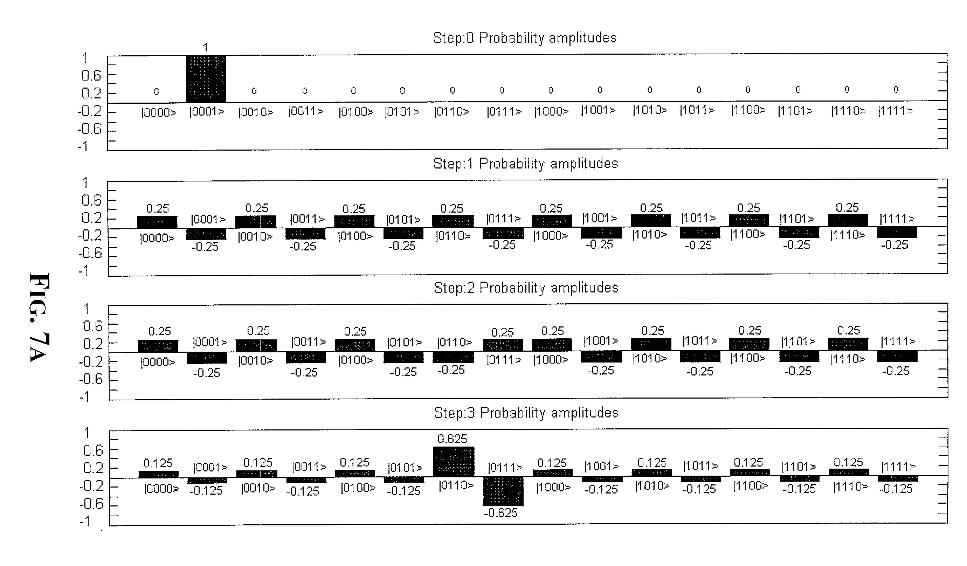

Differently from other quantum algorithms, in Grover's algorithm it is possible to iterate h times the entanglement and interference operations until the best solution is reached. An example of evolution of Grover's algorithm with $n=3$ is given in Figure 7a, in which basis vector and superposition, entanglement and interference output vectors are reported in order. Several iterations of entanglement and interference operations produce a better distribution of probability amplitudes.

Each value is a component on the output vector referred to vectors of a basis of vectors of $n+1$ qubits. As it is possible to notice, there are couples of values of opposite sign, referred to vectors of the basis having in common the first (leftmost) n qubits: for example, the values 0.625 and -0.625 are referred to vectors $|0110\rangle$ and $|0111\rangle$, respectively. Each couple of elements having opposite sign represents the probability amplitude of a certain element of the database. For the considered example, the value 0.625 is the probability of the element associated to vector $|011\rangle$ after 3 iterations (h=3).

The algorithm may be iterated as far as a certain quantity to be minimized, calculated in function of the components of the output vector, is smaller than a certain pre-established value. For instance, this quantity can be the Shannon entropy:

$$S(h) = -\sum_{k=1}^{2^{n+1}} \left\| q_k(h) \right\|^2 \log \left\| q_k(h) \right\|^2 \qquad (7)$$

where $q_k(h)$ is the $k$-th component of the output vector $Q$ taken after $h$ iterations.

The components of the output vector obtained after $h$=15 iterations are represented in Figure 7b. From Figure 7b it is clear that the element of the database to be found is associated to vector $|011\rangle$, and after 15 iterations the Grover's quantum algorithm will find it with a probability of about 0.69.

From the above discussion it is evident that the problem of the great number of computations is even more crucial in Grover's algorithm than in Deutsch-Jozsa's algorithm, because multiplication by the entanglement matrix $U_F$ and the interference matrix $D_n \otimes I$ might be repeated many *(h)* times in order to output the best result.

OBJECT AND SUMMARY OF THE INVENTION

It has been found and is the object of the present invention a hardware quantum gate for performing quantum algorithms in a very fast manner.

The present invention exploits the fact that a large number of multiplications required by the entanglement operation of quantum algorithms gives a null result, because only one component per row of the entanglement matrix $U_F$ is non null. The entanglement operation generates an entanglement vector by permuting or not the places of couples of opposite components of a linear superposition vector, depending on the value assumed by the function *f(.)*. More specifically, if function *f(.)* is null in correspondence of the vector identified by the first *(leftmost)* n qubits in common of the two $n$+1 qubit vectors to which a couple of opposite components that of the superposition vector is referred to, then the corresponding couple of components of the entanglement vector is equal to that of the superposition vector, otherwise is the opposite.

Therefore, it is not necessary to calculate the entanglement matrix $U_F$ to generate an entanglement vector from a superposition vector, but it is sufficient copying or inverting components of a superposition vector to generate corresponding components of an entanglement vector, depending on the values of the function *f(.)*processed by the quantum algorithm. This can be easily done using driven switches input with a pair of components of opposite value of a superposition vector.

More precisely the object of the invention is a quantum gate for running quantum algorithms using a certain binary function defined on a space having a basis of vectors of $n$ of qubits, composed of a superposition subsystem carrying out a superposition operation over components of input vectors for generating components of linear superposition vectors referred on a second basis of vectors of $n$+1 qubits, an entanglement subsystem carrying out an entanglement operation over components of the linear superposition vectors for generating components of entanglement vectors, and an interference subsystem carrying out an interference operation over components of the entanglement vectors for generating components of output vectors.

The entanglement subsystem comprises a command circuit generating a number ($2^n$) of logic command signals encoding the values of the binary function in correspondence of the vectors of the first basis, and an array of multiplexers input with the logic command signals that generate, for each superposition vector, corresponding signals representing components of an entanglement vector.

Each component of the entanglement vector referred to a respective vector of the second basis, is equal to the corresponding component of the respective superposition vector if the binary function is null in correspondence of the vector of the first basis constituted by the first n qubits of the respective vector of the second basis, or the opposite of the corresponding component of the respective superposition vector, if the binary function is non null in correspondence of the vector of the first basis constituted by the first n qubits of the respective vector of the second basis.

The invention is more precisely defined in the annexed claims.

BRIEF DESCRIPTION OF THE DRAWINGS

The particular aspects and advantages of the invention will become more evident through the following description of several important embodiments of the and by referring to the attached drawings, wherein:

**Figure 1** is a block diagram of Quantum Algorithms;
**Figure 2** is a block diagram of an Encoder;
**Figure 3** is a general structure of the Quantum Block in Figure 3;
**Figure 4** is a circuit for a Deutsch-Jozsa's quantum gate;
**Figure 5a** shows an example of tensor product transformation;
**Figure 5b** shows an example of dot product transformation;
**Figure 5c** shows the identity transformation;
**Figure 5d** shows an example of propagation rule;
**Figure 5e** shows an example of iteration rule;
**Figure 5f** explains the input/output tensor rule;
**Figure 6** is an example of a circuit realizing Grover's quantum gate;
**Figures 7a and 7b** illustrate the evolution of a Grover's quantum algorithm;
**Figure 8** is a detailed view of entanglement and interference subsystems of the quantum gate of the invention;
**Figure 9** is a detailed view of section I-a of Figure 8;
**Figure 10** is an embodiment of the section I-b of Figure 8;
**Figure 11** is an embodiment of an adder of section I-c of Figure 8;
**Figure 12** is a detailed view of the digital section of the quantum gate of the invention;
**Figure 13** is a possible embodiment of the level shifters of Figure 12.

DESCRIPTION OF SEVERAL EMBODIMENTS OF THE INVENTION

The quantum gate of the invention is suitable for fast running quantum algorithm applied over a set of input vectors, such as for example decision making or data search routines based on a Deutsch-Jozsa's or a Grover's. It is composed of a superposition subsystem carrying out a linear superposition, an entanglement subsystem carrying out an entanglement operation and an interference subsystem carrying out an interference operation according to the quantum algorithm to be implemented.

An essential feature of the quantum gate of the invention consists in the fact that the entanglement subsystem does not multiply a superposition vector for the entanglement matrix $U_F$, but generates components of an entanglement vector simply by copying or inverting respective components of the superposition vector depending on values of the function $f(.)$.

This expedient allows a relevant reduction of the number of multiplications in respect to known methods, and can be carried out very simply using multiplexers.

For sake of simplicity, the hardware quantum gate of the invention will be described referring to the Grover's quantum algorithm for $n$=3, though what will be said could be easily repeated, *mutatis mutandis,* for other quantum algorithms (in particular the Deutsch and the Deutsch-Jozsa's algorithm) whose entanglement operation consists in a permutation of components of a superposition vector.

A hardware quantum gate of the invention suitable for performing Grover's algorithm with <u>any number of iterations,</u> is substantially composed of two parts:

Part I: (Analogic) Calculation step-by-step of output values. This part is divided in the following subsections:

- I-a: Entanglement;
- I-b and I-c: Interference.

Part II: (Digital) Entropy evaluation, storage of vectors for iterations and output display. This part provides also the first basis of vectors.

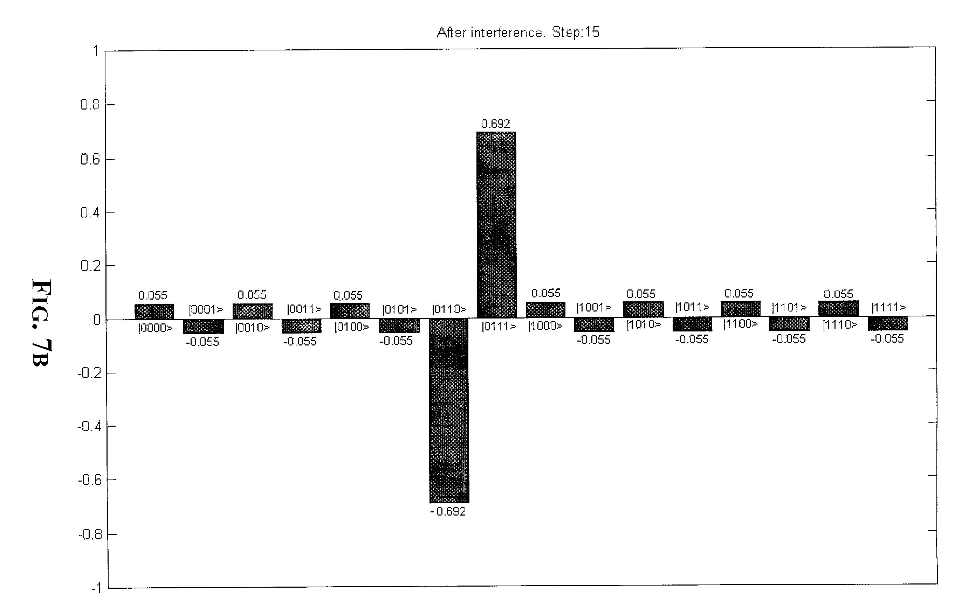

The analogic part of this scheme for a three-qubits quantum gate is depicted in Figure 8. A command circuit HB14 generates eight command signals Vc1, ..., Vc8 each representing a value of the function $f(.)$ on a respective vector of the first basis. An array of multiplexers HB 19 is input with voltage signals O11, ..., O82 representing the sixteen components of a linear superposition vector and generates signals Vo1, ..., Vo8 representing only the even or the odd components of an entanglement vector. Let us suppose that these signals represents the odd components of an entanglement vector.

Section I-a is present in every hardware quantum gate of the invention, irrespectively from the quantum algorithm to be implemented.

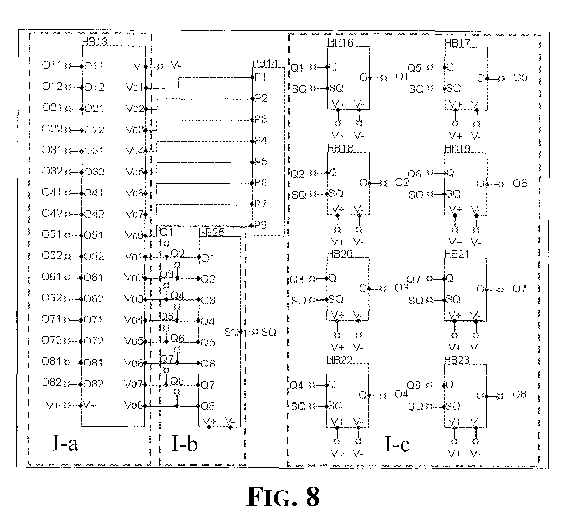

Each multiplexer, depicted in Figure 9, is input with a pair of components (O11 and O12 for example) that are referred to vectors of said second basis having the first (leftmost) 3 qubits in common ($|0000\rangle$ and $|0001\rangle$), and generates a respective component (Vo1) which is equal to O11, if Vc1 represents a null value of function $f(.)$ on vector $|000\rangle$, or to O12 if Vc1 represents a non null value.

Sections I-b and I-c depicted in Figure 8 are specifically designed for the Grover's quantum algorithms.

The presence of tensor products in the interference operation, whose number increases dramatically with the dimensions, constitutes a critical point.

Sections I-b and I-c of Figure 8 of a quantum gate of the invention allow to carry out quickly the interference operation of Grover's quantum algorithm. It has been noticed that the matrix $D_n \otimes I$ has the following properties:

- odd columns (or rows, because $D_n \otimes I$ is symmetric) have nonzero odd components and even columns have nonzero even components;
- the value of all nonzero components, but the $i^{th}$ component of $i^{th}$ column (diagonal elements), is $1/2^{n-1}$. The components on the up-left down-right diagonal of the matrix differ from the other nonzero components because they are decreased by 1;
- being G* an entanglement vector, the output vector of the quantum algorithm $V=(D_n \otimes I)G^*$ involves only a suitable weighted sum of components of G*, the value $1/2^{n-1}$ depending only from the number $n$ of qubits.

From the above analysis, the generic element $v_i$ of $V$ can be written as follows in function of components $g_i^*$ of the entanglement vector G*:

$$
v_i = \begin{cases}
\dfrac{1}{2^{n-1}} \displaystyle\sum_{j=1}^{2^n} g_{2j-1}^* - g_i^* & for \ \ i \ \ odd \\[4mm]
\dfrac{1}{2^{n-1}} \displaystyle\sum_{j=1}^{2^n} g_{2j}^* - g_i^* & for \ \ i \ \ even
\end{cases} \qquad (16)
$$

Therefore, in order to calculate a component $v_i$ of the output vector it is sufficient to calculate a weighted sum of

$$
even \ \ (\frac{1}{2^{n-1}} \sum_{j=1}^{2^n} g_{2j}^* )
$$

or

$$
odd \ \ (\frac{1}{2^{n-1}} \sum_{j=1}^{2^n} g_{2j-1}^* )
$$

components of the entanglement vector and to subtract from it the corresponding component $g_i^*$ of the entanglement vector.

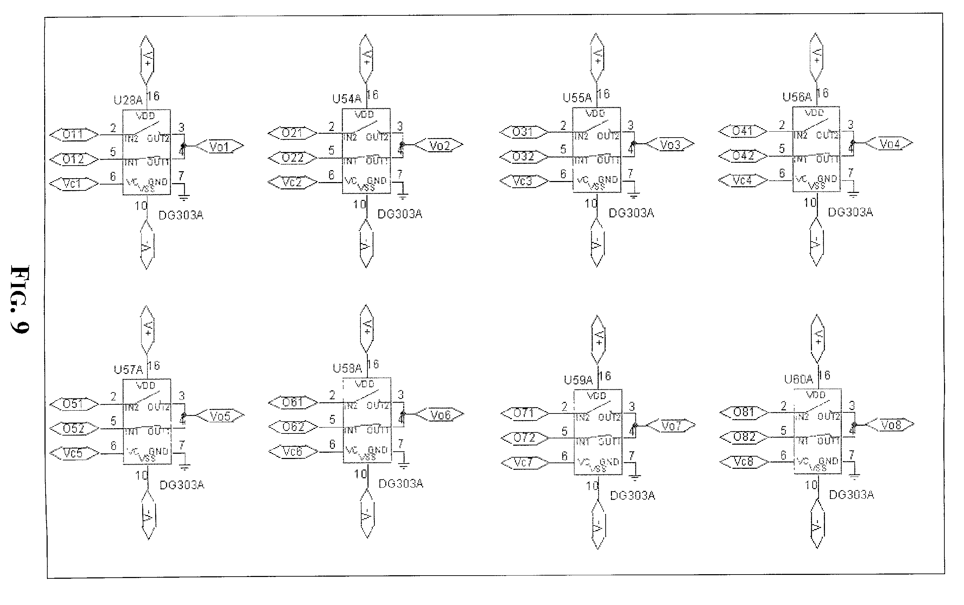

An adder HB25, depicted in greater detail in Figure 10, sums these components with a certain scale factor that depends only on the number n of qubits (which is 0.25 for n=3), generating a signal SQ representing the sum of the odd (or even) components of the entanglement vector. Finally, an array of adders I-c generates signals O1, ..., O8 representing the odd (or even) components of an output vector by subtracting the signals Q1, ..., Q8 from the scaled sum SQ.

A hardware quantum gate of the invention for carrying out a Deutsch-Jozsa's quantum algorithm does not have the sections I-b and I-c of Figure 8 for performing the interference operation. In this case the interference subsystem is substantially composed of an array of adders, each calculating a respective component O1, ..., O8 of the output vector as a linear combination of components Vo1, ..., Vo8 of a corresponding entanglement vector.

It is worth noticing that it is not necessary to calculate all components of the entanglement or output vectors, because the odd components of any vector are always opposite to the even components. For this reason entanglement and interference operations are carried out only on the odd or even components, the other components being calculated by inverting the first ones.

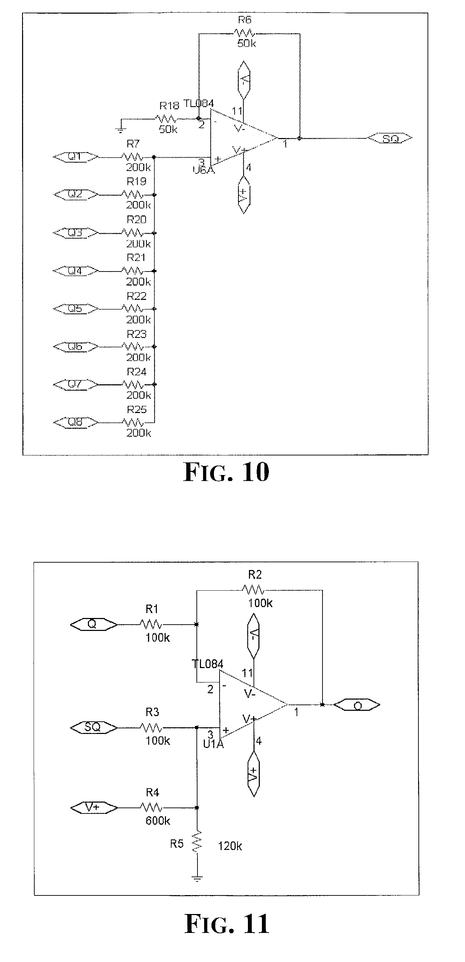

The adders of section I-c may be realized for instance as depicted in Figure 11. As it can be seen, a voltage of 2.5V is added in order to transpose the value inside the range [0÷5]V of A/D converters that interface with Part II (Digital Part).

In order to provide better performances, a different range of probability amplitudes is chosen. The presence of converters, whose range is [0÷5]V, suggests to adopt a range of [-2.5÷2.5] instead of $[-1/\sqrt{2}÷1/\sqrt{2}]$. This fact implies that the output is not normalized to 1 but to $2*2.5^2=12.5$.

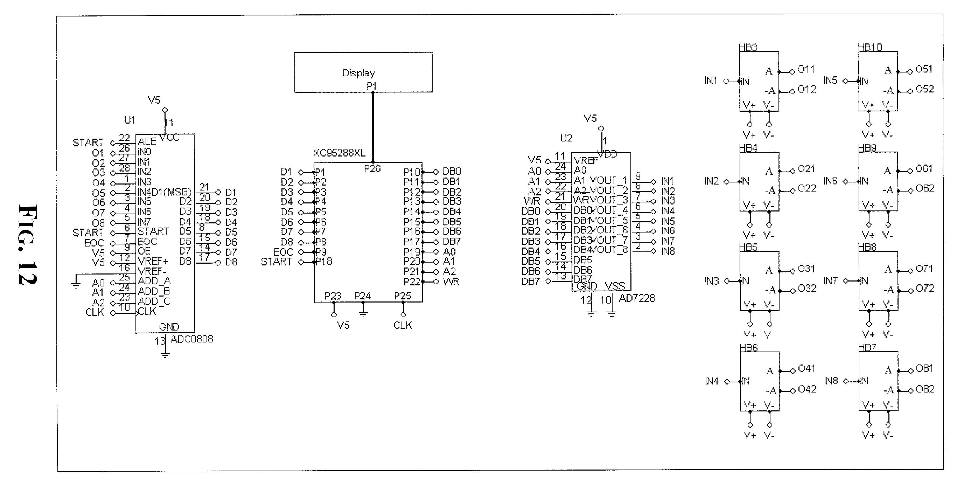

Because of the necessity of different type of operations (storing values, entropy evaluation and stopping iteration) for performing a Grover's algorithm, a microprocessor unit has been chosen as the core of Part II. For instance, an appropriate microprocessor unit may be the commercial device CPLD XC95288XL of STMicroelectronics, depicted in Figure 12.

An analog/digital converter, which may be for example the A/D converter ADC0808 of STMicroelectronics, receives signals representing components O1, ..., 08 of the output vector and produces a corresponding binary string D1, ..., D8. The microprocessor unit XC95288XL receives this string and calculates the Shannon entropy.

Summarizing, the microprocessor unit performs the following functions:

1. Drives correctly the A/D converter.
2. Acquires eight digital values and evaluates Shannon entropy S.
3. Compares S with a fixed threshold.
4. If S<threshold, stops iteration and sends the results to LED Matrix display; otherwise sends them to a digital/analog converter.
5. Provide initial condition of superposed basis vectors.

A display may also be connected to the CPLD in order to display the result. If Shannon entropy is not minimum, the binary string has to be re-converted in an analog signal by a digital/analog converter in order to feedback it into the entanglement subsystem I-a. In the preferred embodiment of Figure 12, the digital/analog converter is the commercial device AD7228 of STMicroelectronics.

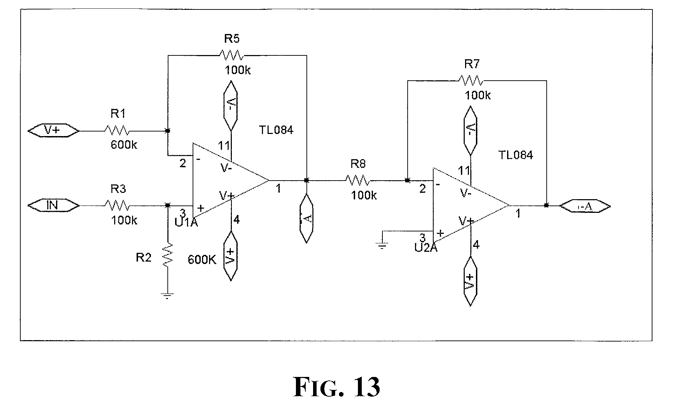

The level shifters HB3, ..., HB10, which can be realized as depicted in Figure 13, re-translate the values of IN1, ..., IN8 into the range [-2.5÷2.5] and re-obtain all components from odd components.

It must be also pointed out that iterations are carried out very fast, according to CPLD frequency (20÷30 MHz). This fact suggests that very high performances could be reached even with a greater number of qubits, realizing a very efficient search in a large database.

## Claims

**1.** A quantum gate for running quantum algorithms using a certain binary function *(f)* defined on a space having a basis of vectors of *n* of qubits, composed of a superposition subsystem carrying out a superposition operation over components of input vectors for generating components of linear superposition vectors referred on a second basis of vectors of *n*+1 qubits, an entanglement subsystem carrying out an entanglement operation over components of said linear superposition vectors for generating components of entanglement vectors, and an interference subsystem carrying out an interference operation over components of said entanglement vectors for generating components of output vectors, said entanglement subsystem comprising

a command circuit (HB14) generating a number $(2^n)$ of logic command signals (Vc1, ..., Vc8) encoding the values of said binary function *(f)* in correspondence of the vectors of the first basis;

an array of multiplexers (I-a), each driven by a respective logic command signal (Vc1, ..., Vc8) and input with a couple of signals (O11, 012; ...; 081, 082) representing components of a linear superposition vector that are referred to vectors of said second basis having the first n qubits in common, outputting, for each superposition vector (O11, ..., O82), corresponding signals representing components of an entanglement vector (Vo1, ..., Vo8), each component (Vo1, ..., Vo8) referred to a respective vector of the second basis being

equal to the corresponding component of the respective superposition vector, if said binary function *(f)* is null in correspondence of the vector of the first basis constituted by the first *n* qubits of said respective vector of the second basis, or

the opposite of the corresponding component of the respective superposition vector, if said binary function *(f)* is non null in correspondence of the vector of the first basis constituted by the first *n* qubits of said respective vector of the second basis.

2. The quantum gate of claim 1 for running a Grover's quantum algorithm, wherein said interference subsystem comprises

an adder input with voltage signals representing even or odd components of an entanglement vector (Vol, ..., Vo8) and generating a sum signal (SQ) representing a weighed sum with a scale factor ($1/2^{n-1}$) of said even or odd components;

an array of adders each being input with a respective signal representing an even or odd component, respectively, of an entanglement vector (Vo1, ..., Vo8) and with said sum signal (SQ), generating a signal representing an even or odd component, respectively, of output vector (O1, ..., O8) as the difference between said sum signal (SQ) and said signal representing an even or odd component of an entanglement vector (Vo1, ..., Vo8).

3. The quantum gate of claim 1 for running a Deutsch-Jozsa's quantum algorithm, wherein said interference subsystem comprises an array of adders each being input with signals representing even or odd components of an entanglement vector (Vol, ..., Vo8) and generating a signal representing a corresponding even or odd component, respectively, of output vector (O1, ..., O8) as a linear combination of said signals representing even or odd components of an entanglement vector (Vo1, ..., Vo8).

4. The quantum gate of claim 2, further comprising an elaboration subsystem having

an analog/digital converter, input with said signals representing odd or even components of output vector (O1, ..., O8) and converting them in a digital string (D1, ..., D8);

a microprocessor unit input with said digital string (D1, ..., D8), that

- calculates a quantity to be minimized (S) associated to said components of output vector (O1, ..., O8),
- compares said quantity to be minimized (S) with a certain threshold and stops the Grover's algorithm or commands another iteration whether it (S) is smaller than the threshold or not, respectively,
- outputs an output digital string representing components of output vector;

a digital/analog converter input with said output digital string, generating output signals (IN1, ..., IN8) corresponding to odd or even components of output vector;

an array of level shifters, each input with a respective output signal (IN1, ..., IN8), and generating a pair of voltage signals, in a certain voltage range, representing opposite components (O11, O12; ...; O81, O82) of a new superposition vector input to said entanglement subsystem.

5. The quantum gate of claim 4, wherein

said analog/digital converter is the commercial device ADC0808;

said microprocessor unit is the commercial device CPLD XC95288XL;

said digital/analog converter is the commercial device AD7228; and

each level shifter is composed of an adder that subtracts a certain voltage (V+) from a respective output signal (IN1, ..., IN8) generating an odd component (O11, O21 ..., O81) of said new superposition vector, and an inverter input with said odd component (O11, O21 ..., O81) generating the corresponding even component (O12, O22 ..., O82).

6. The quantum gate of claim 4, wherein said quantity to be minimized (S) is the Shannon entropy.

**INPUT**

$f$ → **Encoder**
$f \rightarrow F \; ; \; F \rightarrow U_F$ → $U_F$

**Quantum Block**

**OUTPUT**

Answer ← **Decoder** ← Basis Vectors

| Binary strings level | < | Map Table and Interpretation Spaces | < | Complex Hilbert space |

**FIG. 1**

**INPUT**

$f$ → $f$–map table

**Encoder₁**

$f$-m.table $\rightarrow$ $F$-m.table

$F$-map table

**Encoder₂**

$F$-m.table $\rightarrow$ $U_F$-m.table

**OUTPUT**

$U_F$-map table → $U_F$

**FIG. 2**

FIG. 3

FIG. 4

FIG. 5A

FIG. 5B

FIG. 5C

FIG. 5D

FIG. 5E

FIG. 5F

FIG. 6

**FIG. 7A**

**FIG. 7B**

**FIG. 8**

FIG. 9

**FIG. 10**

**FIG. 11**

**FIG. 12**

FIG. 13

## EUROPEAN SEARCH REPORT

**European Patent**
**Office**

**Application Number**

EP 02 42 5672

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 1 083 520 A (YAMAHA MOTOR CO LTD) 14 March 2001 (2001-03-14) * page 8, line 2 - page 33, line 18; figures 4-15 * | 1 | G06N1/00 |
| A | WO 01 67186 A (ST MICROELECTRONICS SRL ;AMATO PAOLO (IT); GHISI FABIO (IT); PORTO) 13 September 2001 (2001-09-13) * page 11, line 22 - page 39, line 4 * * page 46, line 20 - page 50, line 12; figures 3-14,22-31 * | 1 | |
| A | HIOE W ET AL: "A SINGLE FLUX QUANTUM LOGIC GATE WITH HIGH FUNCTIONALITY" SUPERCONDUCTOR SCIENCE AND TECHNOLOGY, IOP PUBLISHING, TECHNO HOUSE, BRISTOL, GB, vol. 4, no. 11, 1 November 1991 (1991-11-01), pages 658-661, XP000561158 ISSN: 0953-2048 * page 659, right-hand column, line 1 - line 27; figure 3 * | 1 | TECHNICAL FIELDS SEARCHED (Int.Cl.7) G06N |
| A | MIQUEL C ET AL: "Factoring in a dissipative quantum computer" PHYSICAL REVIEW, A. GENERAL PHYSICS, AMERICAN INSTITUTE OF PHYSICS. NEW YORK, US, vol. 54, no. 4, October 1996 (1996-10), pages 2605-2613, XP002181469 ISSN: 1050-2947 * page 2607, left-hand column, line 28 - page 2610, right-hand column, line 28; figures 1-6 * | 1 | |

-/--

The present search report has been drawn up for all claims

| Place of search | Date of completion of the search | Examiner |
|---|---|---|
| The Hague | 17 October 2003 | Schenkels, P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

# EUROPEAN SEARCH REPORT

Application Number

EP 02 42 5672

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | VEDRAL V ET AL: "BASIC OF QUANTUM COMPUTATION" PROGRESS IN QUANTUM ELECTRONICS, PERGAMON PRESS, OXFORD, GB, vol. 22, February 1998 (1998-02), pages 1-39, XP000937713 ISSN: 0079-6727 * page 6, line 1 - page 17, line 29; figures 4-9 * | 1 | |

TECHNICAL FIELDS SEARCHED (Int.Cl.7)

The present search report has been drawn up for all claims

| Place of search | Date of completion of the search | Examiner |
|---|---|---|
| The Hague | 17 October 2003 | Schenkels, P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 416 437 A1**

### ANNEX TO THE EUROPEAN SEARCH REPORT
### ON EUROPEAN PATENT APPLICATION NO.

EP 02 42 5672

This annex lists the patent family members relating to the patent documents cited in the above-mentioned European search report.
The members are as contained in the European Patent Office EDP file on
The European Patent Office is in no way liable for these particulars which are merely given for the purpose of information.

17-10-2003

| Patent document cited in search report | | Publication date | Patent family member(s) | | Publication date |
|---|---|---|---|---|---|
| EP 1083520 | A | 14-03-2001 | EP | 1083520 A2 | 14-03-2001 |
| | | | US | 6578018 B1 | 10-06-2003 |
| WO 0167186 | A | 13-09-2001 | WO | 0167186 A1 | 13-09-2001 |
| | | | EP | 1190278 A1 | 27-03-2002 |
| | | | JP | 2003526855 T | 09-09-2003 |

EPO FORM P0459

For more details about this annex : see Official Journal of the European Patent Office, No. 12/82

26